# EUROPEAN PATENT APPLICATION

(11) **EP 4 760 798 A1**
(43) Date of publication of application: **17.06.2026**
(21) Application number: 24851780.7
(22) Date of filing: 02.08.2024
(51) Int. Cl.: H01M 4/133, H01G 11/36, H01G 11/38, H01G 11/42, H01M 4/587, H01M 4/62, H01M 10/04, H01M 10/0585, H01M 50/474

(54) **NEGATIVE ELECTRODE FOR POWER STORAGE DEVICE, AND POWER STORAGE DEVICE**

(30) Priority: 07.08.2023 JP 2023128556
(71) Applicant: KABUSHIKI KAISHA TOYOTA JIDOSHOKKI, Kariya-shi, Aichi 448-8671 (JP)
(72) Inventor: SUGIMOTO Yuki, Kariya-shi, Aichi 448-8671 (JP); MASUDA Masaki, Kariya-shi, Aichi 448-8671 (JP); HASHIZUME Taro, Kariya-shi, Aichi 448-8671 (JP); IWATA Hiroshi, Kariya-shi, Aichi 448-8671 (JP)
(74) Representative: TBK
(86) International application number: PCT/JP2024/027759
(87) International publication number: WO 2025/033355

(57) **Abstract**

A negative electrode (22) for a power storage device includes a negative electrode current collector (22a) including a first surface (22a1), and a negative electrode active material layer (22b) formed on the first surface (22a1) of the negative electrode current collector (22a). The weight per unit area of the negative electrode active material layer (22b) is 20 mg/cm² or greater. The negative electrode active material layer (22b) contains graphite, an aqueous binder having a glass transition temperature less than 7°C, and single-walled carbon nanotubes.

## Description

### TECHNICAL FIELD

The present invention relates to a negative electrode for a power storage device and a power storage device.

### BACKGROUND ART

Patent Literature 1 discloses a flat-type power storage device formed by stacking multiple power storage cells in series. Each power storage cell includes a positive electrode, a negative electrode, and a separator disposed between the positive and negative electrodes. The positive electrode has a positive electrode active material layer formed on one surface of a foil-shaped positive electrode current collector. The negative electrode has a negative electrode active material layer formed on one surface of a foil-shaped negative electrode current collector, and is arranged such that the negative electrode active material layer faces the positive electrode active material layer of the positive electrode. The power storage device disclosed in Patent Literature 1 is formed by stacking multiple such power storage cells with their respective positive and negative electrode current collectors in contact.

Patent Literature 2 discloses a method for continuously manufacturing electrodes using rolls. The electrode manufacturing method disclosed in Patent Literature 2 includes an applying step and a drying step. The applying step applies an electrode composite material containing an active material and a solvent to a current collector fed from a supply roll. In the drying step, following the applying step, the applied layer of the electrode composite material on the current collector is dried. After drying, the current collector is wound onto a take-up roll.

### CITATION LIST

### Patent Literature

Patent Literature 1: JP2017-16825A
Patent Literature 2: JPH11-102696

### SUMMARY OF INVENTION

### Technical Problem

One approach to increasing the energy density of a power storage cell is to increase the weight per unit area of the active material layer. However, in a negative electrode structure in which the active material layer is provided on the surface of a current collector, application of the above-described configuration tends to cause a problem during manufacture of the power storage device that includes the negative electrode. Specifically, the active material layer becomes more prone to separation from the current collector.

Through intensive study, the present inventors have found that the detachment of the active material layer originates from bending load applied to the active material layer during or after manufacture of the negative electrode. Specifically, as the weight per unit area of the active material layer increases, its flexibility decreases. Consequently, when bending load is applied to the active material layer, the layer may crack because it cannot withstand the applied load. Such cracking of the active material layer can cause the layer to detach from the current collector during manufacture of the power storage device.

Situations in which bending load is applied to the active material layer during or after production of the negative electrode include, for example, a case in which the current collector passes a guide roll that changes the conveying direction, and a case in which the current collector is wound around a take-up roll. Both cases cause the current collector to bend along the outer circumferential surface of the roll.

### Solution to Problem

To achieve the foregoing objectives, a negative electrode for a power storage device includes a current collector including a first surface and a negative electrode active material layer formed on the first surface of the current collector. The negative electrode active material layer has a weight per unit area of 20 mg/cm² or greater. The negative electrode active material layer contains graphite that is a negative electrode active material capable of storing and releasing charge carriers, an aqueous binder having a glass transition temperature less than 7°C, and single-walled carbon nanotubes.

The aqueous binder preferably contains a compound having an aromatic ring.

The compound having an aromatic ring is preferably a polymer containing styrene as a structural unit.

The compound having an aromatic ring is preferably styrene-butadiene rubber.

The graphite preferably has a G/D ratio of 3 or greater.

A content of the aqueous binder in the negative electrode active material layer is preferably in a range of 2.0 mass% to 4.0 mass%, and a content of the single-walled carbon nanotubes in the negative electrode active material layer is preferably in a range of 0.001 mass% to 0.02 mass%.

The negative electrode is preferably a bipolar electrode. The current collector preferably includes a second surface facing opposite the first surface. The negative electrode active material layer is preferably formed on the first surface of the current collector. A positive electrode active material layer is preferably formed on the second surface.

The positive electrode active material layer preferably contains a positive electrode active material capable of storing and releasing charge carriers. The positive electrode active material layer preferably has a weight per unit area of 50 mg/cm² or greater. A content of the positive electrode active material in the positive electrode active material layer is preferably 97 mass% or greater. The positive electrode active material layer preferably contains an aqueous binder having a glass transition temperature less than 7°C and single-walled carbon nanotubes.

To achieve the foregoing objective, a power storage device includes a positive electrode, a negative electrode, a separator, and a spacer. **In** the positive electrode, a positive electrode active material layer is provided on a first surface of a positive electrode current collector. In the negative electrode, a negative electrode active material layer is provided on a first surface of a negative electrode current collector. The negative electrode active material layer is disposed to face the positive electrode active material layer of the positive electrode. The separator is disposed between the positive electrode active material layer and the negative electrode active material layer. The spacer is disposed between the first surfaces of the positive electrode current collector and the negative electrode current collector and bonded to the first surfaces of the positive electrode current collector and the negative electrode current collector. The negative electrode is the above-described negative electrode for a power storage device.

### Advantageous Effects of Invention

The present invention suppresses cracking of the negative electrode active material layer caused by bending load.

### BRIEF DESCRIPTION OF DRAWINGS

[Fig. 1] A cross-sectional view of a negative electrode according to a first embodiment.
[Fig. 2] A cross-sectional view of a power storage device.
[Fig. 3] A cross-sectional view of a bipolar electrode according to a second embodiment.

### DESCRIPTION OF EMBODIMENTS

An embodiment of the present invention will now be described with reference to the drawings.

### [First Embodiment]

### <Negative Electrode>

A negative electrode according to a first embodiment is used as an electrode of a power storage device. The power storage device is, for example, a rechargeable battery such as a nickel-metal hydride rechargeable battery or a lithium-ion rechargeable battery. The power storage device may be an electric double-layer capacitor. Hereinafter, a case of an electrode of a lithium-ion rechargeable battery will be described.

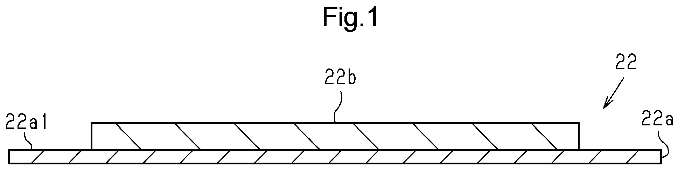

As shown in Fig. 1, a negative electrode 22 includes a negative electrode current collector 22a, which includes a first surface 22a1, and a negative electrode active material layer 22b, which is formed on the first surface 22a1 of the negative electrode current collector 22a. In the present embodiment, the negative electrode current collector 22a corresponds to the current collector recited in the claims.

### [Negative Electrode Current Collector]

The negative electrode current collector 22a is a chemically inert electric conductor that continuously conducts current through the negative electrode active material layer 22b during charging and discharging of a lithium-ion rechargeable battery. The negative electrode current collector 22a has a thickness of, for example, 4 µm or greater, and preferably 6 µm or greater. The negative electrode current collector 22a has a thickness of, for example, 20 µm or less, and preferably 10 µm or less.

One example of the negative electrode current collector 22a is a copper current collector having a copper surface, which serves as the first surface 22a1. The copper current collector may be a monolithic body made entirely of copper, or a composite body including a copper portion and a portion made of a material other than copper. Examples of such a monolithic body include copper foil. Examples of such a composite body include a multilayer structure having a copper layer that forms the first surface 22a1, or a substrate having its surface, including the first surface 22a1, coated with a copper film.

The negative electrode current collector 22a may also be formed of a material other than copper. Examples of such alternative materials include metallic materials, electrically conductive resin materials, and electrically conductive inorganic materials. Examples of the metallic materials include aluminum, nickel, titanium, and stainless steel (for example, SUS304, SUS316, SUS301, and SUS304 as defined in JIS G 4305:2015). Examples of the electrically conductive resin materials include conductive polymer materials or nonconductive polymer resins containing added conductive fillers as needed.

### [Negative Electrode Active Material Layer]

The negative electrode active material layer 22b is provided on the first surface 22a1 of the negative electrode current collector 22a. The weight per unit area of the negative electrode active material layer 22b is 20 mg/cm² or greater, and preferably 30 mg/cm² or greater. When the weight per unit area is 20 mg/cm² or greater, the energy density of the lithium-ion rechargeable battery using the negative electrode 22 can be increased in an effective manner. An increase in the energy density of the lithium-ion rechargeable battery enhances battery characteristics such as capacity and sustained-output performance.

The weight per unit area of the negative electrode active material layer 22b is, for example, 50 mg/cm² or less, and preferably 40 mg/cm² or less. When the weight per unit area is limited to 50 mg/cm² or less, the negative electrode active material layer 22b becomes thinner, thereby enabling a reduction in the overall thickness of the lithium-ion rechargeable battery using the negative electrode 22. The weight per unit area of the negative electrode active material layer 22b is, for example, 20 mg/cm² or greater.

The thickness of the negative electrode active material layer 22b is, for example, in a range of 125 µm to 556 µm. The density of the negative electrode active material layer 22b is, for example, in a range of 0.9 g/cm³ to 1.6 g/cm³. The negative electrode active material layer 22b may be subjected to a pressing process. The pressed negative electrode active material layer 22b has a thickness of, for example, 125 µm or greater, and preferably 187 µm or greater. The pressed negative electrode active material layer 22b has a thickness of, for example, 500 µm or less, and preferably 400 µm or less. The pressed negative electrode active material layer 22b has a density of, for example, in a range of 1.0 g/cm³ to 1.6 g/cm³.

The negative electrode active material layer 22b contains a negative electrode active material, a specific negative electrode binder, and single-walled carbon nanotubes.

### (Negative Electrode Active Material)

The negative electrode active material is capable of storing and releasing charge carriers such as lithium ions. The negative electrode active material is graphite. Examples of graphite include natural graphite, artificial graphite, hard carbon (non-graphitizable carbon), and soft carbon (graphitizable carbon). Examples of the artificial graphite include highly oriented graphite and mesocarbon microbeads. Any type of graphite may be used individually or in combination with other types.

The graphite preferably contains a large amount of a graphitic structure. For example, the graphite has a G/D ratio (as determined by Raman spectroscopy) of 2 or greater, and preferably 3 or greater. Also, the graphite has a G/D ratio of 5 or less, and preferably 4 or less. The G/D ratio refers to the ratio IB/IA in Raman spectroscopy using argon-ion laser, in which IA is the peak intensity in a range of 1570 cm⁻¹ to 1620 cm⁻¹ and IB is the peak intensity in a range of 1350 cm⁻¹ to 1370 cm⁻¹. When graphite containing abundant graphitic structure is employed, π-π interactions occur between the graphite and the single-walled carbon nanotubes within the negative electrode active material layer 103. As a result, when a bending load is applied to the negative electrode active material layer 103, the specific negative electrode binder and the single-walled carbon nanotubes act cooperatively.

The average particle size (D50) of the graphite is, for example, in a range of 10 µm to 20 µm. The average particle size (D50) of the graphite can be measured by using a laser diffraction particle size analyzer.

The content of the negative electrode active material in the negative electrode active material layer 22b is, for example, 90 mass% or greater, preferably 95 mass% or greater, and more preferably 96.5 mass% or greater. The content of the negative electrode active material in the negative electrode active material layer 103 is, for example, 98 mass% or less, and preferably 97.5 mass% or less. When the content of the negative electrode active material is 90 mass% or greater, the energy density of the lithium-ion rechargeable battery using the negative electrode 22 is increased in an effective manner. An increase in the energy density of the lithium-ion rechargeable battery enhances battery characteristics such as capacity and sustained-output performance.

### (Specific Negative Electrode Binder)

The specific negative electrode binder is an aqueous binder having a glass transition temperature of less than 7°C. The aqueous binder is a binder that is dispersed or dissolved in an aqueous solvent, and mixed with the negative electrode active material.

The glass transition temperature of the specific negative electrode binder is below 7°C, preferably 0°C or lower, and more preferably -5°C or lower. When the glass transition temperature of the specific negative electrode binder is below 7°C., the flexibility of the negative electrode active material layer 103 is improved.

The glass transition temperature is determined as the onset temperature of glass transition on a DSC curve measured at a heating rate of 10°C/min using a differential scanning calorimeter (DSC). Except for this heating rate of 10°C/min, the measurement method conforms to JIS K 7121 (1987). The glass transition onset temperature is the temperature at which the baseline of the DSC curve begins to deviate on the low-temperature side.

Examples of the specific negative electrode binder include the following: various resin materials, for example, fluorine-containing resins such as polyvinylidene fluoride, polytetrafluoroethylene, and fluorine rubber; thermoplastic resins such as polypropylene and polyethylene; imide resins such as polyimide and polyamide-imide; alkoxysilyl group-containing resin; acrylic resins; a polymer containing styrene as a structural unit; carboxymethyl cellulose; alginates such as sodium alginate and ammonium alginate; water-soluble cellulose ester crosslinked products; and starch-acrylic acid graft polymers.

Examples of the acrylic resins include polyacrylic acid, polymethacrylic acid, polyacrylic acid ester, polymethacrylic acid ester, a copolymer containing acrylic acid as a structural unit, and polyacrylamide. The acrylic resin is preferably an acrylic resin other than polyacrylic acid.

Examples of the polymer containing styrene as a structural unit include styrene-butadiene rubber and styrene-acrylic rubber.

The specific negative electrode binder contained in the negative electrode active material layer 103 may be a single binder or a combination of two or more.

The glass transition temperature of the specific negative electrode binder can be adjusted by changing the degree of polymerization of the resin material and the ratio of structural units constituting the resin material. For example, when the negative electrode binder is a styrene-butadiene rubber, the glass transition temperature of the negative electrode binder can be adjusted by changing the ratio between styrene and butadiene, which are structural units of the styrene-butadiene rubber. Specifically, the glass transition temperature of the negative electrode binder can be lowered by increasing the ratio of butadiene to styrene. In other words, the glass transition temperature of the negative electrode binder can be lowered by decreasing the ratio of styrene to butadiene.

The specific negative electrode binder is preferably a compound having an aromatic ring. In this case, within the negative electrode active material layer 22b, π-π interactions occur between the aromatic ring of the specific negative electrode binder and the single-walled carbon nanotubes and between the aromatic ring of the specific negative electrode binder and the graphite. Accordingly, when the negative electrode active material layer 103 is subjected to bending load, the specific negative electrode binder and the single-walled carbon nanotubes act cooperatively, and the specific negative electrode binder and the graphite act cooperatively. Examples of the compound having an aromatic ring include a polymer containing styrene in a structural unit such as styrene-butadiene rubber.

The content of the specific negative electrode binder in the negative electrode active material layer 22b is, for example, 2.0 mass% or greater, and preferably 2.3 mass% or greater. Increasing the content of the specific negative electrode binder enhances the binding strength in the negative electrode active material layer 22b. The content of the specific negative electrode binder in the negative electrode active material layer 22b is, for example, 4.0 mass% or less, and preferably 3.0 mass% or less. The specific negative electrode binder does not contribute to charging and discharging in the negative electrode active material layer 22b. Reduction in the content of the component that does not contribute to charging and discharging increases the energy density of the lithium-ion rechargeable battery. An increase in the energy density of the lithium-ion rechargeable battery enhances battery characteristics such as capacity and sustained-output performance.

### (Single-Walled Carbon Nanotubes)

Carbon nanotubes can be broadly classified into two types: single-walled carbon nanotubes and multi-walled carbon nanotubes. A single-walled carbon nanotube is a tubular structure formed by seamlessly rolling a single graphene sheet. **In** contrast, a multi-walled carbon nanotube is a composite body in which multiple single-walled carbon nanotubes of different diameters are nested within a single single-walled carbon nanotube. Accordingly, a single-walled carbon nanotube exhibits greater flexibility than a multi-walled carbon nanotube.

The negative electrode active material layer 22b contains single-walled carbon nanotubes. Within the negative electrode active material layer 22b, the single-walled carbon nanotubes may exist, for example, as bundles composed of several tens of nanotubes.

The fiber length and fiber diameter of the single-walled carbon nanotubes contained in the negative electrode active material layer 22b are not particularly limited. The fiber length of the single-walled carbon nanotubes is, for example, in a range of 5 µm to 1000 µm. The fiber diameter of the carbon nanotubes is, for example, in a range of 1 nm to 20 nm. The fiber length and fiber diameters of the single-walled carbon nanotubes can be measured, for example, using an electron microscope such as a scanning electron microscope (SEM) or a transmission electron microscope (TEM).

The content of single-walled carbon nanotubes in the negative electrode active material layer 103 is, for example, 0.001 mass% or greater, and preferably 0.005 mass% or greater. The content of the single-walled carbon nanotubes in the negative electrode active material layer 103 is, for example, 0.02 mass% or less, and preferably 0.015 mass% or less. The mass ratio of the specific negative electrode binder to the single-walled carbon nanotubes (specific negative electrode binder/single-walled carbon nanotubes) in the negative electrode active material layer 103 is, for example, in a range of 100 to 4000.

### (Other Components)

The negative electrode active material layer 22b may additionally contain, as needed, components other than the negative electrode active material, the specific negative electrode binder, and the single-walled carbon nanotubes. Examples of such additional components include other types of binders, dispersants, conductive agents, electrolytes (such as polymer matrices, ion-conductive polymers, and electrolyte solutions), and electrolyte-supporting salts (lithium salts) that enhance ionic conductivity. The type and content of these additional components are not particularly limited, and conventional knowledge relating to lithium-ion rechargeable batteries may be appropriately referred to.

Examples of the dispersant include a sodium salt of carboxymethyl cellulose and an ammonium salt of carboxymethyl cellulose. The content of the dispersant in the negative electrode active material layer 22b is, for example, 1.0 mass% or less, and preferably 0.5 mass% or less. The content of the dispersant in the negative electrode active material layer 22b is, for example, 0.3 mass% or greater.

Examples of the conductive agent include acetylene black, carbon black, and graphite. The content of the conductive agent in the negative electrode active material layer 22b is, for example, determined such that the total of the conductive agent and the single-walled carbon nanotubes is 0.5 mass% or less, and preferably 0.1 mass% or less.

### <Method for Manufacturing Negative Electrode>

A method for manufacturing the negative electrode 22 is described below.

The method for manufacturing the negative electrode 22 includes an applying step of applying negative electrode composite material to the negative electrode current collector 22a, and a drying step of drying the negative electrode composite material applied to the negative electrode current collector 22a.

The negative electrode composite material forms, upon solidification, the negative electrode active material layer 22b. The negative electrode composite material is, for example, slurry. The negative electrode composite material contains the negative electrode active material, the specific negative electrode binder, the single-walled carbon nanotubes, and an aqueous solvent, and may further contain other components as needed. The negative electrode active material, the specific negative electrode binder, the single-walled carbon nanotubes, and any additional components contained in the negative electrode composite material are the same as those described above for the negative electrode active material layer.

The aqueous solvent is water or a mixed solvent of water and an organic solvent. The aqueous solvent is preferably a solvent in which the mass percent of water is 50 to 100 mass%. The aqueous solvent is incorporated into the negative electrode composite material such that the solid content of the negative electrode composite material is in a range of 50 mass% to 65 mass%.

The applying step is a step of forming an applied layer of the negative electrode composite material by applying the negative electrode composite material to the first surface 22a1 of the negative electrode current collector 22a. Examples of the method for applying the negative electrode composite material include a roll method, a die coating method, a reverse-roll method, a doctor-blade method, a knife method, a gravure method, a dip method, and a squeeze method. The negative electrode composite material may be continuously or intermittently applied to the first surface 22a1 of the negative electrode current collector 22a. The applied layer of the negative electrode composite material is adjusted to have such a thickness that the resulting negative electrode active material layer 22b has a weight per unit area of 20 mg/cm² or greater. The length and the width of the applied layer of the negative electrode composite material are appropriately determined according to the size of the lithium-ion rechargeable battery.

The drying step is a step in which the applied layer formed on the negative electrode current collector 22a is dried to remove the aqueous solvent and solidify the applied layer. The applied layer solidified through the drying step becomes the negative electrode active material layer 22b. Examples of the method for drying the applied layer include natural drying, low-temperature air drying, hot-air drying, vacuum drying, infrared drying, far-infrared drying, electron-beam drying, and microwave drying. Two or more of these drying methods may be used in combination. The drying temperature is, for example, in a range of 20°C to 120°C, and preferably in a range of 40°C to 100°C.

Furthermore, a compression step of compressing the negative electrode active material layer 22b may be performed after the drying step. The compression step corresponds to the above-described pressing process. Examples of the method for compressing the negative electrode active material layer 22b include a die-press method and a calender-press method. The pressing pressure is, for example, in a range of 0.1 t/cm² to 10 t/cm², and preferably in a range of 0. 5 t/cm² to 5.0 t/cm².

When the compression step is performed, the thickness of the negative electrode active material layer 22b subjected to the compression step, i.e., the thicknesses of the negative electrode active material layer 22b prior to the pressing process is, for example, 167 µm or greater, and preferably 250 µm or greater. The thickness of the negative electrode active material layer 22b prior to the pressing process is, for example, 556 µm or less, and preferably 444 µm or less. The density of the negative electrode active material layer 22b prior to the pressing process is, for example, in a range of 0.9 g/cm³ to 1.2 g/cm³.

Between the above steps, or at least at one stage after completion of all the steps, a take-up step may be performed in which the negative electrode current collector 22a is taken up into a roll form. In addition, after the compression step, the drying step may be performed again.

The method for manufacturing the negative electrode includes a bending step that curves, after the drying step, the negative electrode current collector 22a, on which the negative electrode active material layer 22b is formed. The curved state refers to a state in which at least a part of the negative electrode active material layer 22b is curved to have a specific radius of curvature or less, for example, 26 mm or less, or 25.5 mm or less.

Examples of the bending step include a winding step of winding the negative electrode current collector 22a, on which the negative electrode active material layer 22b is formed, around a core, and a curving step of curving the negative electrode current collector 22a along the circumferential surface of a columnar body. The winding step corresponds to, for example, the take-up step described above. The curving step corresponds to, for example, a step in which the negative electrode current collector 22a, on which the negative electrode active material layer 22b is formed, is curved along the outer circumferential surface of a columnar body such as a guide roller or a tension roller when the negative electrode current collector 22a is conveyed by rollers. The bending step may be performed once or multiple times.

### <Power Storage Device>

An example of a power storage device that employs the negative electrode 22 is described below.

The power storage device that employs the negative electrode 22 is, for example, a lithium-ion rechargeable battery used as a battery for various vehicles such as a forklift, a hybrid electric vehicle, and a battery electric vehicle.

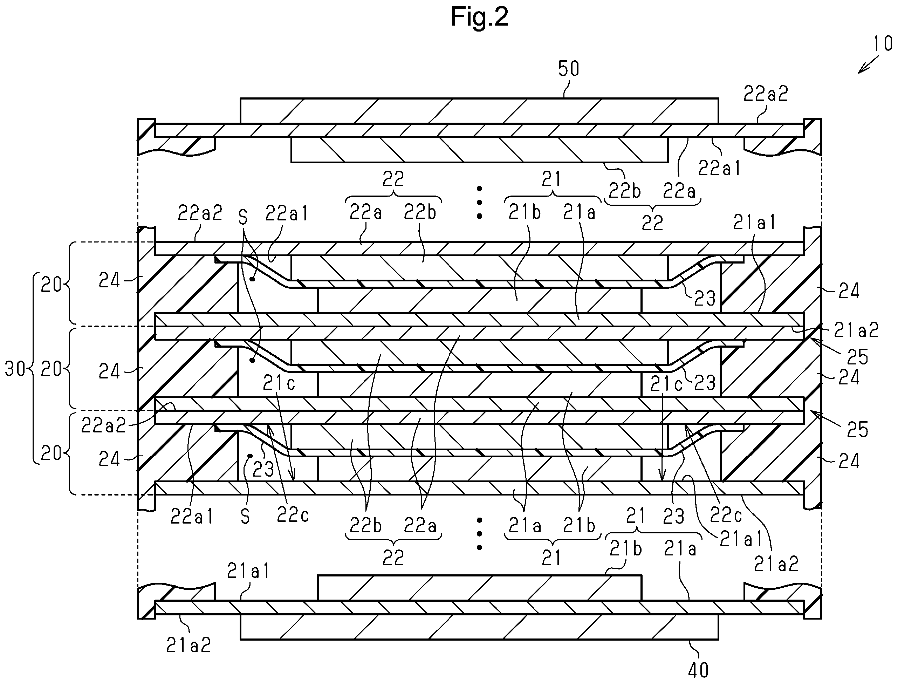

As shown in Fig. 2, a power storage device 10 is configured to include a cell stack 30 (stack body) in which power storage cells 20 are stacked in a stacking direction. Hereinafter, the stacking direction of the power storage cells 20 will be simply referred to as the stacking direction. Each power storage cell 20 includes a positive electrode 21, a negative electrode 22, a separator 23, and a spacer 24.

The positive electrode 21 includes a positive electrode current collector 21a and a positive electrode active material layer 21b, which is provided on a first surface 21a1 of the positive electrode current collector 21a. **In** plan view, the positive electrode active material layer 21b is formed in a central portion of the first surface 21a1 of the positive electrode current collector 21a. A peripheral portion of the first surface 21a1 of the positive electrode current collector 21a in plan view is a positive electrode uncoated portion 21c, on which the positive electrode active material layer 21b is not provided. The positive electrode uncoated portion 21c is disposed to surround the positive electrode active material layer 21b in plan view.

The negative electrode 22 includes a negative electrode current collector 22a and a negative electrode active material layer 22b provided on a first surface 22a1 of the negative electrode current collector 22a. In plan view, the negative electrode active material layer 22b is formed in a central portion of the first surface 22a1 of the negative electrode current collector 22a. A peripheral portion of the first surface 22a1 of the negative electrode current collector 22a in plan view is a negative electrode uncoated portion 22c, on which the negative electrode active material layer 22b is not provided. The negative electrode uncoated portion 22c is disposed to surround the periphery of the negative electrode active material layer 22b in plan view.

The positive electrode 21 and the negative electrode 22 are disposed such that the positive electrode active material layer 21b and the negative electrode active material layer 22b face each other in the stacking direction. That is, the direction in which the positive electrode 21 and the negative electrode 22 face each other agrees with the stacking direction. The negative electrode active material layer 22b is formed to have the same size as the positive electrode active material layer 21b, or is formed to be slightly larger than the positive electrode active material layer 21b. When the negative electrode active material layer 22b is formed to be slightly larger than the positive electrode active material layer 21b, and the entire formation region of the positive electrode active material layer 21b is located within the formation region of the negative electrode active material layer 22b in plan view.

The positive electrode current collector 21a includes a second surface 21a2, which is a surface on the side opposite to the first surface 21a1. The positive electrode 21 is a monopolar electrode, in which neither the positive electrode active material layer 21b nor the negative electrode active material layer 22b is formed on the second surface 21a2 of the positive electrode current collector 21a. The negative electrode current collector 22a includes a second surface 22a2, which is a surface on the side opposite to the first surface 22a1. The negative electrode 22 is a monopolar electrode, in which neither the positive electrode active material layer 21b nor the negative electrode active material layer 22b is formed on the second surface 22a2 of the negative electrode current collector 22a.

The separator 23 is disposed between the positive electrode 21 and the negative electrode 22 and separates the positive electrode 21 and the negative electrode 22 from each other to prevent a short circuit due to contact between the positive electrode 21 and the negative electrode 22, while allowing lithium ions to pass therethrough.

The separator 23 is, for example, a porous sheet or nonwoven fabric containing a polymer that absorbs and retains electrolyte. Examples of materials used for the separator 23 include polyolefins such as polypropylene and polyethylene, as well as polyester. The separator 23 may have a single-layer structure or a multilayer structure. The multilayer structure may include, for example, an adhesive layer, a ceramic layer as a heat-resistant layer, or the like.

The spacer 24 is disposed between the first surface 21a1 of the positive electrode current collector 21a of the positive electrode 21 and the first surface 22a1 of the negative electrode current collector 22a of the negative electrode 22, while being on the outer side of the positive electrode active material layer 21b and the negative electrode active material layer 22b. The spacer 24 is bonded to both the positive electrode current collector 21a and the negative electrode current collector 22a. The spacer 24 ensures a gap between the positive electrode current collector 21a and the negative electrode current collector 22a to prevent a short circuit between the current collectors, and provides a liquid tight seal between the current collectors.

**In** plan view, the spacer 24 is formed to have the shape of a frame that extends along the peripheral portions of the positive electrode current collector 21a and the negative electrode current collector 22a and surrounds the positive electrode current collector 21a and the negative electrode current collector 22a. The spacer 24 is disposed between the positive electrode uncoated portion 21c of the first surface 21a1 of the positive electrode current collector 21a and the negative electrode uncoated portion 22c of the first surface 22a1 of the negative electrode current collector 22a.

Examples of materials used for the spacer 24 include various plastic materials such as polyethylene (PE), modified polyethylene (modified PE), polystyrene (PS), polypropylene (PP), modified polypropylene (modified PP), ABS plastic, and AS plastic.

A sealed space S, which is surrounded by the frame-shaped spacer 24, the positive electrode 21, and the negative electrode 22, is formed inside the power storage cell 20. The sealed space S accommodates the separator 23 and electrolyte. The peripheral portion of the separator 23 is embedded in the spacer 24.

The electrolyte is, for example, a liquid electrolyte. Examples of the liquid electrolyte include a liquid electrolyte containing a nonaqueous solvent and an electrolyte salt dissolved in the nonaqueous solvent. As the electrolyte salts, known lithium salts such as LiClO₄, LiAsF₆, LiPF₆, LiBF₄, LiCF₃SO₃, LiN(FSO₂)₂, and LiN(CF₃SO₂)₂ can be used. As the nonaqueous solvent, known solvents such as cyclic carbonates, cyclic esters, chain carbonates, chain esters, and ethers can be used. These known solvent materials may be used in a combination of two or more thereof.

The spacer 24 seals the sealed space S between the positive electrode 21 and the negative electrode 22, thereby preventing leakage of the electrolyte accommodated in the sealed space S to the outside. The spacer 24 also prevents water from entering the sealed spaces S from the outside of the power storage device 10. Furthermore, the spacer 24 prevents gas generated in the positive electrode 21 or the negative electrode 22, for example, due to charge-discharge reactions, from leaking to the outside of the power storage device 10.

The cell stack 30 has a structure in which the power storage cells 20 are stacked such that the second surface 21a2 of the positive electrode current collector 21a and the second surface 22a2 of the negative electrode current collector 22a are in contact with each other. Thus, the power storage cells 20, which form the cell stack 30, are connected in series.

In the cell stack 30, any two of the power storage cells 20 adjacent to each other in the stacking direction form a quasi-bipolar electrode 25, in which the positive electrode current collector 21a and the negative electrode current collector 22a in contact with each other are regarded as one current collector. The quasi-bipolar electrode 25 includes a current collector having the positive electrode current collector 21a and the negative electrode current collector 22a laminated together, a positive electrode active material layer 21b formed on one side of the current collector, and a negative electrode active material layer 22b formed on the other side.

The power storage device 10 includes two conductive bodies composed of a positive electrode energization plate 40 and a negative electrode energization plate 50 arranged so as to sandwich the cell stack 30 in the stacking direction of the cell stack 30. The positive electrode energization plate 40 and the negative electrode energization plate 50 are each formed of a highly conductive material.

The positive electrode energization plate 40 is electrically connected to the second surface 21a2 of the positive electrode current collector 21a of the positive electrode 21 disposed at the outermost position at one end in the stacking direction. The negative electrode energization plate 50 is electrically connected to the second surface 22a2 of the negative electrode current collector 22a of the negative electrode 22 disposed at the outermost position at the other end in the stacking direction. The power storage device 10 is charged or discharged through terminals provided in the positive electrode energization plate 40 and the negative electrode energization plate 50.

Operation and advantages of the first embodiment are described below.

(1-1) The negative electrode 22 for the power storage device includes a negative electrode current collector 22a, which includes a first surface 22a1, and a negative electrode active material layer 22b, which is formed on the first surface 22a1 of the negative electrode current collector 22a. The weight per unit area of the negative electrode active material layer 22b is 20 mg/cm² or greater. The negative electrode active material layer 22b contains graphite, an aqueous binder (specific negative electrode binder) having a glass transition temperature of less than 7°C, and single-walled carbon nanotubes.

According to the above-described configuration, cooperative action of the aqueous binder (having a glass transition temperature below 7°C) and the single-walled carbon nanotubes, which are contained in the negative electrode active material layer 22b, provides the negative electrode active material layer 22b with high flexibility. Consequently, when a bending load is applied to the negative electrode active material layer 22b during manufacturing processes of the negative electrode 22 such as the above-described bending step, crack formation within the negative electrode active material layer 22b is suppressed. As a result, the negative electrode active material layer 22b is prevented from being detached from the negative electrode current collector 22a when a load is applied to the negative electrode 22 in manufacturing a power storage device including the negative electrode 22.

(1-2) The aqueous binder (specific positive electrode binder) contains a compound having an aromatic ring.

In this case, π-π interactions occur between the aromatic ring of the aqueous binder and the single-walled carbon nanotubes, enabling the aqueous binder and the single-walled carbon nanotubes to move cooperatively. Accordingly, a negative electrode active material layer 22b having even higher flexibility is obtained.

(1-3) The power storage device 10 includes a positive electrode 21, a negative electrode 22, a separator 23, and a spacer 24. The positive electrode 21 includes a positive electrode active material layer 21b provided on the first surface 21a1 of the positive electrode current collector 21a. The negative electrode 22 includes a negative electrode active material layer 22b provided on the first surface 22a1 of the negative electrode current collector 22a. The negative electrode active material layer 22b is disposed to face the positive electrode active material layer 21b of the positive electrode 21. The separator 23 is disposed between the positive electrode active material layer 21b and the negative electrode active material layer 22b. The spacer 24 is disposed between the first surfaces 21a1 and 22a1 of the positive electrode current collector 21a and the negative electrode current collector 22a, and is bonded to the first surfaces 21a1 and 22a1 of the positive electrode current collector 21a and the negative electrode current collector 22a.

When manufacturing the power storage device of the above-described configuration, a process of stacking the positive electrode 21 and the negative electrode 22 with the separator 23 and the spacer 24 provided therebetween and a process of bonding the positive electrode 21 and the spacer 24 to each other need to be performed. Accordingly, compared with the manufacture of conventional prismatic, laminated, or cylindrical batteries, the negative electrode active material layer 22b of the negative electrode 22 is subjected to multiple mechanical loads during manufacture. As a result, detachment of the negative electrode active material layer 22b from the negative electrode current collector 22a is more likely to occur during manufacture. Therefore, when the negative electrode 22 of the present embodiment is employed in the power storage device 10 having the above-described configuration, the advantage of suppressing detachment of the negative electrode active material layer 22b from the negative electrode current collector 22a is more pronounced.

### [Second Embodiment]

A bipolar electrode according to a second embodiment is described below. The bipolar electrode can be used, for example, instead of the quasi-bipolar electrode 25 in the power storage device 10 described above.

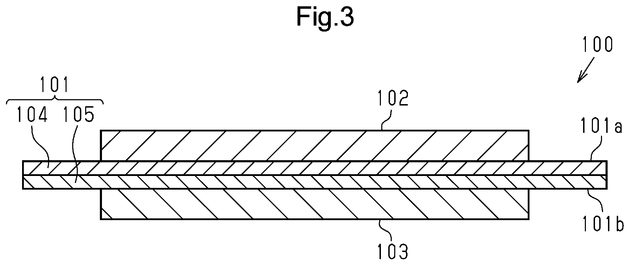

As shown in Fig. 3, a bipolar electrode 100 includes a bipolar current collector 101, a positive electrode active material layer 102, and a negative electrode active material layer 103. In the present embodiment, the bipolar current collector 101 corresponds to the current collector recited in the claims.

The bipolar current collector 101 is a chemically inert electric conductor that continuously conducts current through the positive electrode active material layer 102 and the negative electrode active material layer103 during charging and discharging of the power storage device. The bipolar current collector 101 has a shape that can be bent into a curved state, and is, for example, in the form of a foil. The bipolar current collector 101 includes a first surface 101b and a second surface 101a facing opposite the first surface 101b. The first surface 101b and the second surface 101a are orthogonal to the thickness direction of the bipolar current collector 101.

The bipolar current collector 101 is a stacked body formed by integrally bonding a positive electrode current collector 104 and a negative electrode current collector 105 in the thickness direction. The second surface 101a of the bipolar current collector 101 is formed by the positive electrode current collector 104. The first surface 101b of the bipolar current collector 101 is formed by the negative electrode current collector 105. The positive electrode active material layer 102 is provided on the second surface 101a of the bipolar current collector 101. The negative electrode active material layer 103 is provided on the first surface 101b of the bipolar current collector 101.

### [Negative Electrode Current Collector and Negative Electrode Active Material Layer]

The negative electrode current collector 105 is a chemically inert electric conductor that continuously conducts current through the negative electrode active material layer 103 during charging and discharging of a lithium-ion rechargeable battery. Each component of the negative electrode current collector 105 is the same as that of the negative electrode current collector 22a of the first embodiment. Each component of the negative electrode active material layer 103 is the same as that of the negative electrode active material layer 22b of the first embodiment.

### [Positive Electrode Current Collector]

The positive electrode current collector 104 is a chemically inert electric conductor that continuously conducts current through the positive electrode active material layer 102 during charging and discharging of the lithium-ion rechargeable battery. The positive electrode current collector 104 has a thickness of, for example, 5 µm or greater, and preferably 10 µm or greater. The positive electrode current collector 21a has a thickness of, for example, 100 µm or less, and preferably 60 µm or less.

One example of the positive electrode current collector 104 is an aluminum current collector having an aluminum surface, which serves as the second surface 101a. The aluminum current collector may be a monolithic body made entirely of aluminum, or a composite body including an aluminum portion and a portion made of a material other than aluminum. Examples of such a monolithic body include aluminum foil. Examples of such a composite body include a multilayer structure having an aluminum layer that forms the second surface 101a, or a substrate having its surface, including the second surface 101a, coated with an aluminum film.

The positive electrode current collector 104 may also be formed of a material other than aluminum. Examples of such alternative materials include metallic materials, electrically conductive resin materials, and electrically conductive inorganic materials. Examples of the metallic materials include copper, nickel, titanium, and stainless steel (for example, SUS304, SUS316, SUS301, and SUS304 as defined in JIS G 4305:2015). Examples of the electrically conductive resin materials include conductive polymer materials or nonconductive polymer resins containing added conductive fillers as needed.

The second surface 101a of the positive electrode current collector 104 may be covered with a known protective layer such as a carbon coat layer. The second surface 101a of the positive electrode current collector 104 may be treated by a known method such as plating.

A preferred combination of the positive electrode current collector 104 and the negative electrode current collector 105, which form the bipolar current collector 101, is a configuration in which the positive electrode current collector 104 is made of aluminum foil and the negative electrode current collector 105 is made of copper foil. Examples of the bipolar current collector 101 include a current collector formed by laminating two aluminum foils together, a current collector formed by laminating an aluminum foil and a copper foil together, and a current collector in which copper is plated onto the surface of an aluminum foil.

### [Positive Electrode Active Material Layer]

The weight per unit area of the positive electrode active material layer 102 is, for example, greater than 50 mg/cm², preferably 60 mg/cm² greater, and more preferably 70 mg/cm² greater. When the weight per unit area is greater than 50 mg/cm², the energy density of the lithium-ion rechargeable battery using the bipolar electrode 100 is increased in an effective manner. An increase in the energy density of the lithium-ion rechargeable battery enhances battery characteristics such as capacity and sustained-output performance.

The weight per unit area of the positive electrode active material layer 102 is, for example, 90 mg/cm² or less, and preferably 80 mg/cm² or less. When the weight per unit area is limited to 90 mg/cm² or less, the positive electrode active material layer 102 becomes thinner, thereby enabling a reduction in the overall thickness of the lithium-ion rechargeable battery when the bipolar electrode 100 is used. The weight per unit area of the positive electrode active material layer 102 is, for example, 50 mg/cm² or greater.

The thickness of the positive electrode active material layer 102 is, for example, in a range of 200 µm to 600 µm. The density of the positive electrode active material layer 102 is, for example, in a range of 1.5 g/cm³ to 2.5 g/cm³. The positive electrode active material layer 102 may be subjected to a pressing process. The pressed positive electrode active material layer 102 has a thickness of, for example, 200 µm or greater, preferably 240 µm or greater. The pressed positive electrode active material layer 102 has a thickness of, for example, 530 µm or less, and preferably 470 µm or less. The pressed positive electrode active material layer 102 has a density of, for example, in a range of 1.7 g/cm³ to 2.5 g/cm³.

The positive electrode active material layer 102 contains a positive electrode active material, a specific positive electrode binder, and single-walled carbon nanotubes.

### (Positive Electrode Active Material)

The positive electrode active material is capable of storing and releasing charge carriers such as lithium ions. The positive electrode active material is not particularly limited, and a material that can be used as a positive electrode active material of a lithium-ion rechargeable battery is employed. Examples of the positive electrode active material include polyanionic compounds having an olivine structure, lithium composite metal oxides having a layered rock-salt structure, and metal oxides having a spinel structure. Any one of these positive electrode active materials may be used alone or in combination of two or more types.

The positive electrode active material is preferably a polyanionic compound having an olivine structure (hereinafter referred to as an olivine-type active material). Examples of the olivine-type active material include a compound represented by a general formula LiMₕPO₄. In the general formula LiMₕPO₄, M is at least one element selected from the group consisting of Mn, Fe, Co, Ni, Cu, Mg, Zn, V, Ca, Sr, Ba, Ti, Al, Si, B, Te and Mo, and h is a number satisfying 0 < h <2. Specific examples of the olivine-type active material include olivine-type lithium iron phosphate (LiFePO₄) and olivine-type lithium manganese iron phosphate (LiMnFePO₄).

The particle shape of the positive electrode active material is not particularly limited, but it is preferable that the positive electrode active material be in the form of granulated bodies of aggregated primary particles. Using such granulated bodies increases the flexibility of the positive electrode active material layer 21b. The particle size of the primary particles constituting the granulated bodies is, for example, in a range of 50 nm to 500 nm. The particle size of the primary particles is determined by small-angle X-ray scattering (SAXS). Specifically, the particle size of the primary particles is a numerical value that is defined as an average particle size (D50) obtained from a particle size distribution of the primary particles, which is calculated assuming that the primary particles are spherical. The average particle size (D50) of the granulated bodies is, for example, in a range of 5 µm to 15 µm. The average particle size (D50) of the granulated bodies can be measured by using a laser diffraction particle size analyzer.

The positive electrode active material is preferably particles having a carbon coating on the surfaces. In this case, within the positive electrode active material layer 102, hydrophobic interactions occur between the surface of the positive electrode active material particles and the single-walled carbon nanotubes. As a result, when a bending load is applied to the positive electrode active material layer 102, the positive electrode active material and the single-walled carbon nanotubes act cooperatively. A preferred example of the particle of the positive electrode active material having the carbon coating is particles having a core formed of a granulated body of an olivine-type active material and a carbon coating formed on the surface of the core.

The content of the positive electrode active material in the positive electrode active material layer 102 is, for example, 97 mass% or greater, preferably 98 mass% or greater, and more preferably 98.5 mass% or greater. The content of the positive electrode active material in the positive electrode active material layer 102 is, for example, 99 mass% or less, and preferably 98.8 mass% or less. When the content of the positive electrode active material is 97 mass% or greater, the energy density of the lithium-ion rechargeable battery using the bipolar electrode 100 is increased in an effective manner. An increase in the energy density of the lithium-ion rechargeable battery enhances battery characteristics such as capacity and sustained-output performance.

### (Specific Positive Electrode Binder)

The specific positive electrode binder is an aqueous binder having a glass transition temperature of less than 7°C. The aqueous binder is a binder that is dispersed or dissolved in an aqueous solvent, and mixed with the positive electrode active material.

The glass transition temperature of the specific positive electrode binder is below 7°C, preferably 0°C or lower, and more preferably -5°C or lower. When the glass transition temperature of the specific positive electrode binder is below 7°C., the flexibility of the positive electrode active material layer 102 is improved. The glass transition temperature of the specific positive electrode binder is, for example, -50°C or higher.

Examples of the specific positive electrode binder include the following: various resin materials, for example, fluorine-containing resins such as polyvinylidene fluoride, polytetrafluoroethylene, and fluorine rubber; thermoplastic resins such as polypropylene and polyethylene; imide resins such as polyimide and polyamide-imide; alkoxysilyl group-containing resin; acrylic resins; a polymer containing styrene as a structural unit; carboxymethyl cellulose; alginates such as sodium alginate and ammonium alginate; water-soluble cellulose ester crosslinked products; and starch-acrylic acid graft polymers.

Examples of the acrylic resins include polyacrylic acid, polymethacrylic acid, polyacrylic acid ester, polymethacrylic acid ester, a copolymer containing acrylic acid as a structural unit, and polyacrylamide. The acrylic resin is preferably an acrylic resin other than polyacrylic acid.

Examples of the polymer containing styrene as a structural unit include styrene-butadiene rubber and styrene-acrylic rubber.

The specific positive electrode binder contained in the positive electrode active material layer 21b may be a single binder or a combination of two or more.

The glass transition temperature of the specific positive electrode binder can be adjusted by changing the degree of polymerization of the resin material and the ratio of structural units constituting the resin material. For example, when the positive electrode binder is a styrene-butadiene rubber, the glass transition temperature of the positive electrode binder can be adjusted by changing the ratio between styrene and butadiene, which are structural units of the styrene-butadiene rubber. Specifically, the glass transition temperature of the positive electrode binder can be lowered by increasing the ratio of butadiene to styrene. In other words, the glass transition temperature of the positive electrode binder can be lowered by decreasing the ratio of styrene to butadiene.

The specific positive electrode binder is preferably a compound having an aromatic ring. In this case, within the positive electrode active material layer 102, π-π interactions occur between the aromatic ring of the specific positive electrode binder and the single-walled carbon nanotubes. As a result, when a bending load is applied to the positive electrode active material layer 102, the specific positive electrode binder and the single-walled carbon nanotubes act cooperatively. Examples of the compound having an aromatic ring include a polymer containing styrene in a structural unit such as styrene-butadiene rubber.

The content of the specific positive electrode binder in the positive electrode active material layer 102 is, for example, 0.8 mass% or greater, preferably 0.9 mass% or greater, and more preferably 1.0 mass% or greater. Increasing the content of the specific positive electrode binder enhances the binding strength in the positive electrode active material layer 102.

The content of the specific positive electrode binder in the positive electrode active material layer 102 is, for example, 2.0 mass% or less, preferably 1.5 mass% or less, and more preferably 1.3 mass% or less. The specific positive electrode binder does not contribute to charging and discharging in the positive electrode active material layer 102. Reduction in the content of the component that does not contribute to charging and discharging increases the energy density of the lithium-ion rechargeable battery. An increase in the energy density of the lithium-ion rechargeable battery enhances battery characteristics such as capacity and sustained-output performance.

### (Single-Walled Carbon Nanotubes)

Within the positive electrode active material layer 102, the single-walled carbon nanotubes may exist, for example, as bundles composed of several tens of nanotubes.

The fiber length and fiber diameter of the single-walled carbon nanotubes contained in the positive electrode active material layer 102 are not particularly limited. The fiber length of the single-walled carbon nanotubes is, for example, in a range of 5 µm to 1000 µm. The fiber diameter of the carbon nanotubes is, for example, in a range of 1 nm to 10 nm. The fiber length and fiber diameters of the single-walled carbon nanotubes can be measured, for example, using an electron microscope such as a scanning electron microscope (SEM) or a transmission electron microscope (TEM).

The content of single-walled carbon nanotubes in the positive electrode active material layer 102 is, for example, 0.01 mass% or greater, and preferably 0.03 mass% or greater. The content of the single-walled carbon nanotubes in the positive electrode active material layer 102 is, for example, 0.1 mass% or less, and preferably 0.07 mass% or less. The mass ratio of the specific positive electrode binder to the single-walled carbon nanotubes (specific positive electrode binder/single-walled carbon nanotubes) in the positive electrode active material layer 102 is, for example, in a range of 8 to 200.

### (Other Components)

The positive electrode active material layer 102 may additionally contain, as needed, components other than the positive electrode active material, the specific positive electrode binder, and the single-walled carbon nanotubes. Examples of such additional components include other types of binders, dispersants, conductive agents, electrolytes (such as polymer matrices, ion-conductive polymers, and electrolyte solutions), and electrolyte-supporting salts (lithium salts) that enhance ionic conductivity. The type and content of these additional components are not particularly limited, and conventional knowledge relating to lithium-ion rechargeable batteries may be appropriately referred to.

Examples of the dispersant include a sodium salt of carboxymethyl cellulose and an ammonium salt of carboxymethyl cellulose. The content of the dispersant in the positive electrode active material layer 102 is, for example, 2.0 mass% or less, preferably 1.0 mass% or less, and more preferably 0.5 mass% or less. The content of the dispersant in the positive electrode active material layer 102 is, for example, 0.3 mass% or greater.

Examples of the conductive agent include acetylene black, carbon black, and graphite. The content of the conductive agent in the positive electrode active material layer 102 is, for example, determined such that the total of the conductive agent and the single-walled carbon nanotubes is 1.0 mass% or less, preferably 0.5 mass% or less, and more preferably 0.1 mass% or less.

### <Method for Manufacturing Bipolar Electrode>

A method for manufacturing the bipolar electrode 100 is described below.

The method for manufacturing the bipolar electrode 100 includes a negative electrode forming step and a positive electrode forming step.

The negative electrode forming step includes a negative electrode applying step of applying a negative electrode composite material to the first surface 101b of the bipolar current collector 101, and a negative electrode drying step of drying the negative electrode composite material applied to the bipolar current collector 101. The negative electrode applying step and the negative electrode drying step are the same as the applying step and the drying step described in the method for manufacturing a negative electrode except that the bipolar current collector 101 for the bipolar electrode 100 is used instead of the negative electrode current collector 22a.

The positive electrode forming step includes a positive electrode applying step of applying a positive electrode composite material to the second surface 101a of the bipolar current collector 101, and a positive electrode drying step of drying the positive electrode composite material applied to the bipolar current collector 101.

The positive electrode composite material forms, upon solidification, the positive electrode active material layer 102. The positive electrode composite material is, for example, slurry. The positive electrode composite material contains the positive electrode active material, the specific positive electrode binder, the single-walled carbon nanotubes, and an aqueous solvent, and may further contain other components as needed. The positive electrode active material, the specific positive electrode binder, the single-walled carbon nanotubes, and any additional components contained in the positive electrode composite material are the same as those described above for the positive electrode active material layer.

The aqueous solvent is water or a mixed solvent of water and an organic solvent. The aqueous solvent is preferably a solvent in which the mass percent of water is 50 to 100 mass%. The aqueous solvent is incorporated into the positive electrode composite material such that the solid content of the positive electrode composite material is in a range of 60 mass% to 80 mass%.

The order the negative electrode forming step and the positive electrode forming step is not particularly limited. For example, the positive electrode forming step may be performed after performing the negative electrode forming step, or the negative electrode forming step may be performed after performing the positive electrode forming step. Alternatively, part or all of the negative electrode forming step and the positive electrode forming step may be performed simultaneously. For example, after the application of the negative electrode composite material to the second surface 101a of the bipolar current collector 101 and the application of the positive electrode composite material to the second surface 101a of the bipolar current collector 101 are simultaneously performed, the drying of the applied layer of the negative electrode composite material and the drying of the applied layer of the positive electrode composite material may be simultaneously performed.

To increase the electrode density, a compression step may be performed after either or both of the negative electrode drying step and the positive electrode drying step, to compress either or both of the negative electrode active material layer 103 and the positive electrode active material layer 102. The compression step is the same as the compression step described in the method for manufacturing the positive electrode.

When the compression step is performed on the positive electrode active material layer 102, the thickness of the positive electrode active material layer 102 subjected to the compression step, i.e., the thicknesses of the positive electrode active material layer 102 prior to the pressing process is, for example, 227 µm or greater, and preferably 273 µm or greater. The thickness of the positive electrode active material layer 102 prior to the pressing process is, for example, 600 µm or less, and preferably 533 µm or less. The density of the positive electrode active material layer 102 prior to the pressing process is, for example, in a range of 1.5 g/cm³ to 2.2 g/cm³.

Between the above steps, or at least at one stage after completion of all the steps, a take-up step may be performed in which the bipolar current collector 101 is taken up into a roll form. After the compression step, either or both of the negative electrode drying step and the positive electrode drying step may be performed again.

The method for manufacturing the bipolar electrode 100 includes a bending step that curves, after the negative electrode drying step, the bipolar current collector 101, on which the negative electrode active material layer 103 is formed. The bending step is the same as the bending step described in the above method for manufacturing a negative electrode. When the positive electrode forming step is performed after the negative electrode forming step, the bending step may be performed during the positive electrode forming step.

In the bipolar electrode 100 of the second embodiment, the same advantages as those described in (1-1) through (1-3) for the negative electrode 22 of the first embodiment are obtained. Further, the second embodiment has the following advantages.

(2-1) The bipolar electrode 100 includes the bipolar current collector 101, which includes the first surface 101b and the second surface 101a facing opposite the first surface 101b. The positive electrode active material layer 102 is formed on the second surface 101a of the bipolar current collector 101, and the negative electrode active material layer 103 is formed on the first surface 101b. The configuration of the negative electrode active material layer 103 is the same as the negative electrode active material layer 22b of the first embodiment.

In the bipolar electrode 100, the active material layer needs to be formed on both the first surface 101b and the second surface 101a of the bipolar current collector 101. Therefore, as compared with a monopolar electrode in which an electrode is formed on only one surface of a current collector, the number of bending steps, in which a bending load is applied to the negative electrode active material layer 103 is increased in the manufacturing process, so that the negative electrode active material layer 103 is more likely to be cracked. Accordingly, when the negative electrode active material layer 103 of the bipolar electrode 100 is configured to contain the aqueous binder having a glass transition temperature of lower than 7°C and the single-walled carbon nanotubes, cracking of the negative electrode active material layer 103 can be more effectively suppressed.

(2-2) The positive electrode active material layer 102 contains a positive electrode active material. The weight per unit area of the positive electrode active material layer 102 is greater than 50 mg/cm². The content of the positive electrode active material in the positive electrode active material layer 102 is 97 mass% or greater. The positive electrode active material layer 102 contains an aqueous binder having a glass transition temperature less than 7°C and single-walled carbon nanotubes.

According to the above-described configuration, cooperative action of the aqueous binder (having a glass transition temperature below 7°C) and the single-walled carbon nanotubes, which are contained in the positive electrode active material layer 102, provides the positive electrode active material layer 102 with high flexibility. This suppresses cracking of the positive electrode active material layer 102 that would otherwise occur when a bending load is applied to the positive electrode active material layer 102. As a result, the positive electrode active material layer 102 is prevented from being detached from the bipolar current collector 101 when a load is applied to the bipolar electrode 100 in manufacturing a power storage device.

The above-described embodiments may be modified as described below. The above-described embodiments and the following modifications can be combined if the combined modifications remain technically consistent with each other.
- The configuration of the positive electrode active material layer 102 of the bipolar electrode 100 is not limited to the above-described embodiments, and a known configuration of a positive electrode active material layer used for a negative electrode of a power storage device can be used.
- The shapes of the negative electrode current collector 22a and the negative electrode active material layer 22b in plan view are not particularly limited. For example, the shapes may be a polygonal shape such as a rectangular shape, a circular shape, or an elliptical shape.
- The shapes of the positive electrode current collector 21a and the positive electrode active material layer 21b in plan view are not particularly limited. For example, the shapes may be a polygonal shape such as a rectangular shape, a circular shape, or an elliptical shape.
- The negative electrode active material layer 22b may be provided on the second surface 22a2 of the negative electrode current collector 22a.
- The number of the power storage cells 20 forming the power storage device 10 is not particularly limited. For example, there may be only one power storage cell 20 in the power storage device 10.

### Examples

Specific examples of the above-described embodiment will now be described.

### <Preparation of Negative Electrode>

Graphite having a G/D ratio of 3.4, styrene-butadiene rubber (SBR), single-walled carbon nanotubes (CNT), and carboxymethyl cellulose sodium salt (CMC) were mixed at a blending ratio shown in Tables 1 and 2, and water was added to the mixture to prepare a negative electrode composite material having a solid content ratio of 56 mass%.

The row labeled 'Type of CNT' in Tables 1 and 2 identifies the kind of carbon nanotube used. The content of carbon nanotubes in each example was adjusted so that the electrode resistance was approximately the same among all samples. The row labeled 'Tg of SBR (°C)' in Tables 1 and 2 identifies the glass transition temperature of the styrene-butadiene rubber. The glass transition temperature was measured as the onset temperature of glass transition on a DSC curve, obtained in accordance with JIS K 7121 (1987), except that the heating rate was set to 10°C/min.

A copper foil having a thickness of 8 µm was prepared as a current collector. Using the doctor-blade method, the negative electrode composite material was applied as a film onto one surface of the current collector. The applied negative electrode composite material was then heated at 50°C to dry and solidify it, thereby forming a negative electrode active material layer on the current collector. Negative electrodes were thus fabricated for Examples 1 and 2, Comparative Examples 1 through 3, and Reference Examples 1 and 2, in which the weights per unit area of the negative electrode active material layers were 17 mg/cm² or 38 mg/cm².

### <Bending Test>

The negative electrode of each example was cut into 5cm × 10cm test specimen. The test specimen was wound, with the side bearing the negative electrode active material layer facing outward, around half the circumference of a columnar body having a diameter of 50 mm. After winding, the condition of the surface of the negative electrode active material layer was visually inspected. The results are shown in Tables 1 and 2. The evaluation criteria were set as follows.
∘: No cracks observed on the surface of the negative electrode active material layer.
×: Cracks observed on the surface of the negative electrode active material layer.

**[Table 1]**

| Negative Electrode Active Material Layer | | Example 1 | Example 2 |
|---|---|---|---|
| Blending Ratio (mass%) | Graphite | 96.99 | 96.99 |
| | SBR | 2.6 | 2.6 |
| | CNT | 0.01 | 0.01 |
| | CMC | 0.4 | 0.4 |
| Weight per Unit Area (mg/cm²) | | 38 | 38 |
| Tg of SBR(°C) | | -13 | -5 |
| Type of CNT | | Single Walled | Single Walled |
| Bending Test | | ○ | ○ |

**[Table 2]**

| Negative Electrode Active Material Layer | | Comparative Example 1 | Comparative Example 2 | Comparative Example 3 | Reference Example 1 | Reference Example 2 |
|---|---|---|---|---|---|---|
| Blending Ratio (mass%) | Graphite | 96.99 | 96.75 | 97.0 | 91.2 | 97.2 |
| | SBR | 2.6 | 2.6 | 2.6 | 2.2 | 2.2 |
| | CNT | 0.01 | 0.25 | - | - | - |
| | CMC | 0.4 | 0.4 | 0.4 | 0.6 | 0.6 |
| Weight per Unit Area (mg/cm²) | | 38 | 38 | 38 | 17 | 38 |
| Tg of SBR (°C) | | 7 | -13 | -5 | 7 | 7 |
| Type of CNT | | Single Walled | Multi Walled | - | - | - |
| Bending Test | | × | × | × | ○ | × |

Examples 1 and 2 are cases in which the negative electrode active material layer contains both an aqueous binder having a glass transition temperature below 7°C and single-walled carbon nanotubes. No cracks were observed in the negative electrode active material layers of Examples 1 and 2. In contrast, in Comparative Example 1, in which an aqueous binder having a glass transition temperature of 7°C was used in place of the aqueous binder having a glass transition temperature below 7°C, cracks were observed in the negative electrode active material layer. Likewise, cracks were observed in the negative electrode active material layer of Comparative Example 2, in which multi-walled carbon nanotubes were used instead of single-walled carbon nanotubes, and in the negative electrode active material layer of Comparative Example 3, in which no carbon nanotubes were included. These results indicate that the crack-suppressing effect observed in the negative electrode active material layers of Examples 1 and 2 is not attributable to the independent action of either the aqueous binder having a glass transition temperature below 7°C or the single-walled carbon nanotubes alone, but rather to the cooperative action of both components.

Although detailed data are omitted, Examples 1 and 2 were also subjected to the same bending test using a columnar body having a diameter of 25 mm instead of 50 mm. As a result, no cracks were observed in the negative electrode active material layers of Examples 1 and 2.

Reference Examples 1 and 2 are cases in which an aqueous binder having a glass transition temperature of 7°C was used and no carbon nanotubes were included. The weight per unit area of the negative electrode active material layer differed between Reference Examples 1 and 2. In Reference Example 1, in which the weight per unit area was 17 mg/cm², no cracks were observed in the negative electrode active material layer. In Reference Example 2, in which the weight per unit area was 38 mg/cm², cracks were observed in the negative electrode active material layer. Thus, even when an aqueous binder having a glass transition temperature of 7°C or higher is used and no single-walled carbon nanotubes are included, cracks do not occur in the negative electrode active material layer if its weight per unit area is low. Accordingly, cracking of the negative electrode active material layer caused by bending stress is a phenomenon that appears as the weight per unit area increases. Therefore, the crack-suppressing effect achieved by the combined use of an aqueous binder having a glass transition temperature below 7°C and single-walled carbon nanotubes is an unexpected effect that could not have been predicted from structures having a relatively low weight per unit area of the negative electrode active material layer.

### <Preparation of Bipolar Electrode and Bending Test>

Granulated bodies of LiFePO₄ (LFP) having a carbon coat layer, styrene-butadiene rubber (SBR), single-walled carbon nanotubes (CNT), and carboxymethyl cellulose sodium salt (CMC) were mixed at a blending ratio shown in Table 3, and water was added to the mixture to prepare a positive electrode composite material having a solid content ratio of 75 mass%.

Graphite having a G/D ratio of 3.4, styrene-butadiene rubber (SBR), single-walled carbon nanotubes (CNT), and carboxymethyl cellulose sodium salt (CMC) were mixed at a blending ratio shown in Table 3, and water was added to the mixture to prepare a negative electrode composite material having a solid content ratio of 56 mass%.

As a current collector, an aluminum foil having a thickness of 30 µm in which a copper foil having a thickness of 8 µm was laminated on one surface was prepared. Using the doctor-blade method, the positive electrode composite material was applied as a film onto a surface of the aluminum foil of the current collector. The applied positive electrode composite material was heated at 50°C to dry and solidify the positive electrode composite material, thereby forming a positive electrode active material layer having a weight per unit area of 75 mg/cm² on the current collector. Thereafter, using the doctor-blade method, the negative electrode composite material was applied as a film onto the surface of the copper foil of the current collector. The applied negative electrode composite material was heated at 50°C to dry and solidify the negative electrode composite material, thereby forming a negative electrode active material layer having a weight per unit area of 37.8 mg/cm² on the current collector. Thus, a bipolar electrode having a positive electrode active material layer and a negative electrode active material layer was fabricated.

**[Table 3]**

| Negative Electrode Active Material Layer | | | Positive Electrode Active Material Layer | | |
|---|---|---|---|---|---|
| Blending Ratio (mass%) | Graphite | 96.55 | Composition (mass%) | LFP | 98.25 |
| | SBR | 3.0 | | SBR | 1.3 |
| | CNT | 0.05 | | CNT | 0.05 |
| | CMC | 0.4 | | CMC | 0.4 |
| Weight per Unit Area (mg/cm²) | | 37.8 | Weight per Unit Area (mg/cm²) | | 75.0 |
| Tg of SBR(°C) | | -13 | Tg of SBR (°C) | | -13 |
| Type of CNT | | Single Walled | Type of CNT | | Single Walled |

Two samples were used as test specimens: one was prepared by cutting the fabricated bipolar electrode into 5cm × 10cm, and the other was prepared by cutting the fabricated bipolar electrode into 120cm × 150cm. Each test specimen was wound, with the side bearing the negative electrode active material layer facing outward, around half the circumference of a columnar body having a diameter of 50 mm. After winding, the condition of the surface of the negative electrode active material layer and the condition of the surface of the positive electrode active material layer were visually inspected. As a result, no cracks were observed in the negative electrode active material layer and the positive electrode active material layer in any of the test specimens.

### REFERENCE SIGNS LIST

22) Negative Electrode
22a) Negative Electrode Current Collector
22a1) First Surface
22b) Negative Electrode Active Material Layer
100) Bipolar Electrode
101) Bipolar Current Collector
101b) First Surface
101a) Second Surface
102) Positive Electrode Active Material Layer
103) Negative Electrode Active Material Layer
104) Positive Electrode Current Collector
105) Negative Electrode Current Collector

## Claims

1. A negative electrode for a power storage device, comprising:
a current collector including a first surface; and
a negative electrode active material layer formed on the first surface of the current collector, wherein
the negative electrode active material layer has a weight per unit area of 20 mg/cm² or greater, and
the negative electrode active material layer contains:
graphite that is a negative electrode active material capable of storing and releasing charge carriers;
an aqueous binder having a glass transition temperature less than 7°C; and
single-walled carbon nanotubes.

2. The negative electrode for a power storage device according to claim 1, wherein the aqueous binder contains a compound having an aromatic ring.

3. The negative electrode for a power storage device according to claim 2, wherein the compound having an aromatic ring is a polymer containing styrene as a structural unit.

4. The negative electrode for a power storage device according to claim 2, wherein the compound having an aromatic ring is styrene-butadiene rubber.

5. The negative electrode for a power storage device according to any one of claims 1 to 4, wherein the graphite has a G/D ratio of 3 or greater.

6. The negative electrode for a power storage device according to any one of claims 1 to 5, wherein
a content of the aqueous binder in the negative electrode active material layer is in a range of 2.0 mass% to 4.0 mass%, and
a content of the single-walled carbon nanotubes in the negative electrode active material layer is in a range of 0.001 mass% to 0.02 mass%.

7. The negative electrode for a power storage device according to any one of claims 1 to 6, wherein
the negative electrode is a bipolar electrode,
the current collector includes a second surface facing opposite the first surface,
the negative electrode active material layer is formed on the first surface of the current collector, and
a positive electrode active material layer is formed on the second surface.

8. The negative electrode for a power storage device according to claim 7, wherein
the positive electrode active material layer contains a positive electrode active material capable of storing and releasing charge carriers,
the positive electrode active material layer has a weight per unit area of 50 mg/cm² or greater,
a content of the positive electrode active material in the positive electrode active material layer is 97 mass% or greater, and
the positive electrode active material layer contains:
an aqueous binder having a glass transition temperature less than 7°C; and
single-walled carbon nanotubes.

9. A power storage device, comprising:
a positive electrode in which a positive electrode active material layer is provided on a first surface of a positive electrode current collector;
a negative electrode in which a negative electrode active material layer is provided on a first surface of a negative electrode current collector, the negative electrode active material layer being disposed to face the positive electrode active material layer of the positive electrode;
a separator disposed between the positive electrode active material layer and the negative electrode active material layer; and
a spacer disposed between the first surfaces of the positive electrode current collector and the negative electrode current collector and bonded to the first surfaces of the positive electrode current collector and the negative electrode current collector,
wherein the negative electrode is the negative electrode for a power storage device according to any one of claims 1 to 8.
